# EUROPÄISCHE PATENTSCHRIFT

(11) **EP 1 454 503 B1**
(45) Veröffentlichungstag und Bekanntmachung des Hinweises auf die Patenterteilung: **09.05.2007**
(21) Anmeldenummer: 02804213.3
(22) Anmeldetag: 02.12.2002
(51) Int. Cl.: H04Q 7/32

(54) **SPEICHERN VON UND ZUGREIFEN AUF DATEN IN EINEM MOBILGERÄT UND EINEM BENUTZERMODUL**
STORING AND ACCESSING DATA IN A MOBILE DEVICE AND A USER MODULE
MEMORISATION DE DONNEES ET ACCES A DES DONNEES DANS UN APPAREIL MOBILE ET UN MODULE UTILISATEUR

(30) Priorität: 04.12.2001 DE 10159398
(43) Veröffentlichungstag der Anmeldung: 08.09.2004
(60) Teilanmeldung: 05008743.6
(73) Patentinhaber: Giesecke & Devrient GmbH, 81677 München (DE)
(72) Erfinder: KIRSCH, Jochen, Col. Del Valle 03100 México, D.F. (MX); KLAASSEN, Ralf, 81825 München (DE); ECKARDT, Stefan, 81825 München (DE)
(86) Internationale Anmeldenummer: PCT/EP2002/013627
(87) Internationale Veröffentlichungsnummer: WO 2003/049471

(56) Entgegenhaltungen:
- EP-A- 0 730 387
- EP-A- 0 891 111
- EP-A- 0 969 644
- EP-A- 1 107 627
- WO-A-00/48416
- WO-A-00/59244
- US-A- 5 802 175
- US-A- 5 814 798

## Beschreibung

Die Erfindung betrifft allgemein das technische Gebiet des Speicherns von und Zugreifens auf Daten in Mobilgeräten sowie in Benutzermodulen für derartige Geräte. Ein bevorzugtes Einsatzgebiet der Erfindung sind Mobilgeräte, die dem Benutzer sowohl Telekommunikationsfunktionen (z.B. die Sprach- und/oder Datenübertragung über ein Telekommunikationsnetz) als auch Anwendungsprogramme (z.B. einen Terminplaner oder einen Texteditor) bereitstellen. Derartige Mobilgeräte können insbesondere als leistungsfähige Mobiltelefone oder als persönliche digitale Assistenten (PDAs = personal digital assistants) ausgestaltet sein.

Die deutsche Offenlegungsschrift DE 197 24 901 A1 zeigt ein Mobiltelefon nach dem GSM-Standard (GSM = global system for mobile communication). Das Mobiltelefon weist eine Steuereinheit, einen Gerätespeicher und eine Schnittstelle für ein Teilnehmeridentifikationsmodul (SIM = subscriber identity module) auf. Über eine Leitungsverbindung mit einem Computer können Nutzdaten, z.B. Adressenlisten oder Umsatzdaten oder Preislisten, in den Gerätespeicher geladen werden. Ferner ist die Möglichkeit vorgesehen, über die Leitungsverbindung nicht näher spezifizierte Programme in den Gerätespeicher zu laden und später durch das Mobiltelefon ausführen zu lassen. Die Datenübertragung kann integritätsgesichert oder verschlüsselt erfolgen.

In der Regel wird beim Einschalten eines GSM-Mobiltelefons eine Berechtigungsabfrage durchgeführt, bei der der Benutzer eine persönliche Geheimzahl (PIN = personal identification number) eingeben muss. Die vollständige Benutzeroberfläche einschließlich der Zugriffsmöglichkeit auf die in dem Mobiltelefon gespeicherten Nutzdaten wird nur bei korrekter Eingabe der Geheimzahl freigegeben. Die meist vertraulichen Nutzdaten sind damit in gewissem Umfang gesichert. Es besteht jedoch das Problem, dass diese Sicherung mit hinreichender krimineller Energie umgangen werden kann. So können beispielsweise mittels geeigneter Geräte Speicherbausteine des Mobiltelefons unmittelbar auf Hardwareebene ausgelesen werden.

Die Speicherung von Nutzdaten im Mobilgerät ist insbesondere dann sinnvoll, wenn das Mobilgerät auch zum Ausführen von Anwendungsprogrammen zur Verarbeitung dieser Nutzdaten eingerichtet ist. Diese Funktionalität ist heute schon bei leistungsfähigen GSM-Mobiltelefonen sowie bei PDAs gegeben. Für Mobilgeräte der 2.5-ten und 3-ten Generation, z.B. Geräte für die Netze GPRS (general packet radio service), EDGE, UMTS (universal mobile telecommunications system) und WCDMA (wideband code-division multiple access) ist es wegen der hohen Übertragungsgeschwindigkeiten realistisch, Anwendungsprogramme über die Luftschnittstelle von einem Dienstanbieter in das Mobilgerät zu laden und/oder zu aktualisieren.

Bei den genannten Mobilgeräten bestehen Probleme beziehungsweise Verbesserungsbedarf in mehrerlei Hinsicht. Erstens soll auch hier ein unautorisierter Zugriff auf Anwendungsprogramme verhindert werden. Es soll also sichergestellt sein, dass nur der berechtigte Benutzer ein Anwendungsprogramm beziehungsweise einzelne gesicherte Funktionen des Anwendungsprogramms aufrufen kann. Zweitens wäre eine Möglichkeit wünschenswert, dem Benutzer eine möglichst genau auf seine Bedürfnisse zugeschnittene Auswahl von Funktionen anzubieten. Drittens soll eine möglichst weitgehende Geräteunabhängigkeit der bereitgestellten Funktionen erreicht werden.

Aus der EP-A 1 107 627 ist ein Mobilgerät bekannt, welches einen Gerätespeicher aufweist und über eine Schnittstelle mit einem Benutzermodul verbunden ist. Die Nutzdaten im Gerätespeicher des Mobilgerätes sind zumindest teilweise in verschlüsselter Form gespeichert, wobei das Benutzermodul, d.h. die SIM-Karte den Zugriffschlüssel zum Entschlüsseln der Nutzerdaten enthält und nach Eingabe der PIN freigibt.

Aus der US-A 5 802175 ist weiterhin ein System zum Ver- und Entschlüsseln von Daten bekannt, bei dem in einem tragbarem Modul, das mit einem Computer verbunden wird, die Schlüssel zu Ver- und Entschlüsselung abgelegt sind.

Der Nachteil der bekannten Lösungen besteht darin, dass der Ver- bzw. Entschlüsselungsvorgang im Endgerät ausgeführt wird und die zwischen Endgerät und Modul ausgetauschten Daten abgehört werden können und somit ein Sicherheitsrisiko darstellen.

Die Erfindung hat die Aufgabe, die genannten Probleme ganz oder teilweise zu lösen. Insbesondere sollen durch die Erfindung die Sicherheit und der Schutz gegen unberechtigte Zugriffe auf Nutzdaten in einem Mobilgerät erhöht werden. In bevorzugten Ausgestaltungen soll die Erfindung ferner hohen Komfort für den Benutzer bereitstellen und kostengünstig verwirklicht werden können.

Erfindungsgemäß wird diese Aufgabe ganz oder zum Teil gelöst durch ein Verfahren mit den Merkmalen des Anspruchs 1, ein Mobilgerät mit den Merkmalen des Anspruchs 8 und ein Benutzermodul mit den Merkmalen des Anspruchs 9. Die abhängigen Ansprüche betreffen bevorzugte Ausgestaltungen der Erfindung.

Die Erfindung geht von der Grundidee aus, durch eine geeignete Speicherung der Nutzdaten die oben genannten Sicherheitsanforderungen zu erfüllen. Diese werden erfindungsgemäß im Gerätespeicher des Mobilgeräts in verschlüsselter Form abgelegt. Zumindest zum Entschlüsseln der Nutzdaten (und in bevorzugten Ausgestaltungen auch zum Verschlüsseln) dienen entsprechende Funktionen, die vom Benutzermodul bereitgestellt werden.

Dadurch, dass die Nutzdaten im Speicher des Mobilgeräts lediglich in verschlüsselter Form vorliegen, sind diese Daten auch dann gegen Ausspähung gesichert, wenn sich ein Unbefugter unter Umgehung der normalen Benutzerschnittstelle des Mobilgeräts Zugriff auf den Inhalt des Gerätespeichers verschafft. Der in der Regel großzügig bemessene Gerätespeicher kann ohne Sicherheitsbedenken zur Speicherung der Nutzdaten eingesetzt werden, wodurch sich größere Datenmengen und komplexe Datenstrukturen im Mobilgerät mitführen lassen.

Die erfindungsgemäß zur Speicherung vorgesehenen Nutzdaten können beliebige vom Benutzer gewünschte Daten sein. Vorzugsweise sind dies Daten, die auch von einem auf dem Mobilgerät laufenden Anwendungsprogramm verarbeitet werden können, beispielsweise Termin- und Adressenlisten zur Verarbeitung durch einen Terminplaner mit Adressbuchfunktion, geschäftliche Tabellen z.B. zur Verarbeitung durch Tabellenkalkulationsprogramme, Sprachdaten beispielsweise erzeugt durch Diktataufzeichnungsprogramme oder allgemeine Texte zur Verarbeitung durch Texteditoren. Auch eine Speicherung von Nutzdaten, für die kein entsprechendes Anwendungsprogramm im Mobilgerät verfügbar ist, kann wünschenswert sein. Das Mobilgerät dient dann als sicherer Datenträger zum Austausch der Nutzdaten z.B. zwischen dem Arbeitsplatz und einem Heimbüro.

In bevorzugten Ausgestaltungen werden die Ver- und Entschlüsselungsfunktionen teilweise oder vollständig von einer Prozessoreinheit des Benutzermoduls ausgeführt, wobei die Prozessoreinheit auf Schlüsseldaten zugreift, die in einem Modulspeicher enthalten sind. Die Schlüsseldaten brauchen in diesen Ausgestaltungen das Benutzermodul nicht zu verlassen, wodurch eine besonders hohe Sicherheit erzielt wird. Dies gilt besonders dann, wenn die Schlüsseldaten auch innerhalb des Benutzermoduls erzeugt und in den Modulspeicher eingeschrieben werden. Es sind jedoch auch Ausgestaltungen der Erfindung vorgesehen, bei denen zumindest das Verschlüsseln und möglicherweise auch das Entschlüsseln der Nutzdaten ganz oder teilweise durch eine Prozessoreinheit des Mobilgeräts ausgeführt wird, an die die vom Benutzermodul bereitgestellten Ver- und/oder Entschlüsselungsfunktionen übertragen werden.

Vorzugsweise wird ein asymmetrisches Verschlüsselungsverfahren wie z.B. das RSA-Verfahren (RSA = Rivest-Shamir-Adleman) eingesetzt. Die Schlüsseldaten weisen dann einen öffentlichen Schlüssel und einen privaten Schlüssel auf. Es sind jedoch auch Ausgestaltungen vorgesehen, bei denen symmetrische Verschlüsselungsverfahren verwendet werden. Konzeptuell wird auch bei diesen Ausgestaltungen von "Ver- und Entschlüsselungsfunktionen" gesprochen, auch wenn in beiden Fällen die gleichen Berechnungsschritte ausgeführt werden.

Erfindungsgemäß ist zumindest zum Ausführen der Entschlüsselungsschritte das Benutzermodul erforderlich. Dies bewirkt bereits einen gewissen Schutz, weil das Benutzermodul und das Mobilgerät getrennt aufbewahrt werden können. In bevorzugten Ausführungsformen ist jedoch vorgesehen, dass zumindest die Entschlüsselungsfunktion nur nach Eingabe eines Kennworts (passphrase) und/oder nach einer biometrischen Prüfung, z.B. der Prüfung eines Fingerabdrucks oder einer Sprachanalyse, freigegeben wird. Durch diese Maßnahme ist die Datensicherheit auch dann gewährleistet, wenn das Mobilgerät zusammen mit dem Benutzermodul abhanden kommt.

Das Mobilgerät ist in bevorzugten Ausgestaltungen ein Telekommunikationsgerät, insbesondere ein Mobiltelefon oder ein persönlicher digitaler Assistent (PDA) mit Telefoniefunktionen. Das Benutzermodul ist vorzugsweise ein Teilnehmeridentifikationsmodul (SIM = subscriber identification module), wie es auch zur Einbuchung in ein Telekommunikationsnetz benötigt wird. Insbesondere kann ein Benutzermodul vorgesehen sein, das als sogenanntes trusted device oder tamper resistant device manipulationsgesichert ist, so dass ein Ausspähen der Ver- und Entschlüsselungsfunktionen oder der Schlüsseldaten oder vertraulicher Konfigurationsdaten verhindert wird. Die Verwendung eines Teilnehmeridentifikationsmoduls bietet sich auch dann an, wenn das Mobilgerät keine Telefoniefunktionen aufweist oder das Modul nicht bei einem Telefonieanbieter registriert ist, weil derartige Module in großen Stückzahlen hergestellt werden und dadurch relativ kostengünstig verfügbar sind.

Das Mobilgerät und das Benutzermodul sind vorzugsweise mit Merkmalen weitergebildet, die den oben beschriebenen und/oder in den abhängigen Verfahrensansprüchen genannten Merkmalen entsprechen.

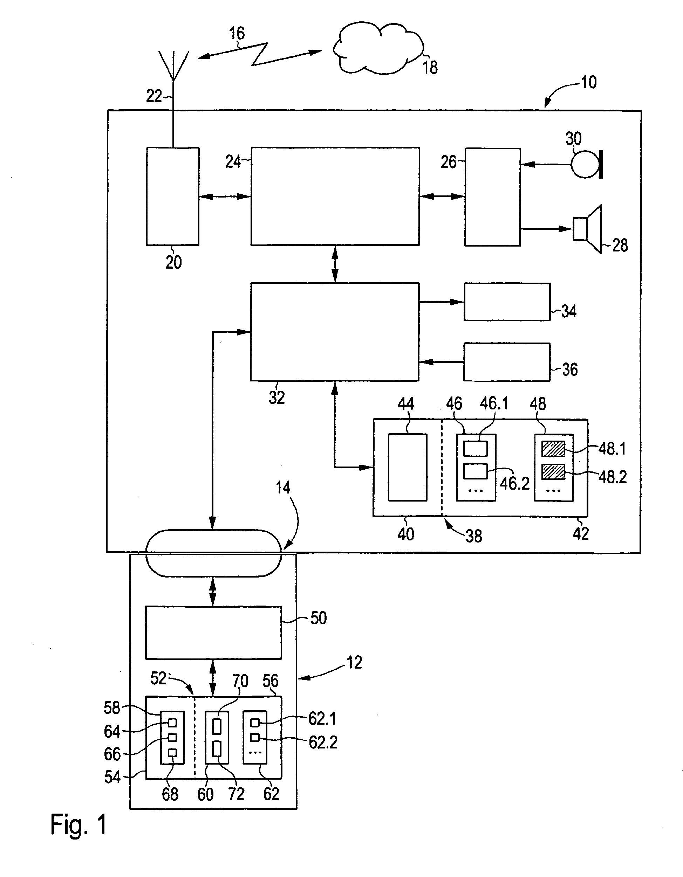

Weitere Merkmale, Vorteile und Aufgaben der Erfindung gehen aus der folgenden genauen Beschreibung eines Ausführungsbeispiels der Erfindung und mehrerer Ausführungsalternativen hervor. Es wird auf die schematische Zeichnung verwiesen, in der Fig. 1 ein Blockdiagramm wesentlicher Funktionseinheiten eines Systems nach dem vorliegend beschriebenen Ausführungsbeispiel der Erfindung zeigt.

In Fig. 1 sind ein Mobilgerät 10 und ein Benutzermodul 12 dargestellt, die über eine Schnittstelle 14 miteinander verbunden sind. Das Mobilgerät 10 ist im vorliegenden Ausführungsbeispiel als leistungsfähiges Mobiltelefon ausgestaltet, das Telekommunikationsfunktionen gemäß den Standards GSM für Telefoniedienste und GPRS für Datenübertragungsdienste bereitstellt. Entsprechend ist das Benutzermodul 12 als SIM-Karte ausgebildet, welche in das Mobiltelefon eingesetzt wird oder fest im Mobiltelefon angeordnet ist. Über eine Luftschnittstelle 16 vermag das Mobilgerät 10 auf ein entsprechendes Telekommunikationsnetz 18 zuzugreifen. In Ausführungsalternativen ist das Mobilgerät 10 nach einem weiterentwickelten Mobilfunkstandard, z.B. UMTS, und/oder als persönlicher digitaler Assistent (PDA), der auch multimediafähig sein kann, ausgestaltet.

In an sich bekannter Weise weist das Mobilgerät 10 einen Hochfrequenzteil 20 auf, der Funkwellen über eine Antenne 22 sendet und empfängt. Ein digitaler Signalprozessor (DSP) 24 dient zur Verarbeitung des Sende- bzw. Empfangssignals. Ferner verarbeitet der digitale Signalprozessor 24 Niederfrequenzsignale, die über einen Niederfrequenzteil 26 an einen Lautsprecher 28 geleitet werden beziehungsweise von einem Mikrofon 30 über den Niederfrequenzteil 26 an den digitalen Signalprozessor 24 ausgegeben werden. Eine Prozessoreinheit 32 koordiniert alle im Mobilgerät 10 ablaufenden Vorgänge. Die Prozessoreinheit 32 ist mit der Schnittstelle 14, dem digitalen Signalprozessor 24, einer hier als grafikfähiges LCD-Display ausgestalteten Anzeige 34, einer Tastatur 36 und einem Gerätespeicher 38 verbunden. Der Gerätespeicher 38 kann fest installiert oder abnehmbar, beispielsweise in Form einer Speicherkarte, ausgeführt sein.

Der Gerätespeicher 38 ist durch mehrere Halbleiterchips in unterschiedlichen Speichertechnologien implementiert. In der konzeptionellen Darstellung von Fig. 1 weist der Gerätespeicher 38 einen nur-lesbaren Bereich 40 (z.B. implementiert als maskenprogrammiertes ROM) und einen beschreibbaren Bereich 42, z.B. implementiert als RAM oder EEPROM oder FLASH-Speicher, auf. Der nur-lesbare Bereich 40 des Gerätespeichers 38 enthält insbesondere Betriebsprogramme 44, die von der Prozessoreinheit 32 als grundlegendes Betriebssystem des Mobilgeräts 10 sowie zur Implementierung der Telekommunikationsfunktionen ausgeführt werden. In den beschreibbaren Bereich 42 sind Anwendungsprogramme 46 und Nutzdaten 48 geladen.

Fig. 1 zeigt als Beispiel für die Anwendungsprogramme 46 einen Terminplaner 46.1 (mit Adressbuchfunktion) und einen Texteditor 46.2. Als Nutzdaten 48 sind in Fig.1 eine Termin- und Adressenliste 48.1 für den Terminplaner 46.1 und ein Brief 48.2 für den Texteditor 46.2 dargestellt. Die Anwendungsprogramme 46 werden von der Prozessoreinheit 32 ausgeführt und greifen auf die Nutzdaten 48 zu. Die Nutzdaten 48 sind im Gerätespeicher 38 verschlüsselt abgelegt, was in Fig.1 durch eine Schraffur angedeutet ist.

Das Benutzermodul 12 ist als Teilnehmeridentifikationsmodul (SIM) für das Telekommunikationsnetz 18 ausgestaltet, und auch die Schnittstelle 14 entspricht mechanisch und elektrisch den für dieses Telekommunikationsnetz 18 vorgesehenen Normen. Das Benutzermodul 12 weist eine als Mikrocontroller ausgestaltete Prozessoreinheit 50 auf, die auf einem einzigen Chip mit einem Modulspeicher 52 integriert ist. Der Modulspeicher 52 ist durch unterschiedliche Speichertechnologien in einen nur-lesbaren Bereich 54 und einen beschreibbaren Bereich 56 unterteilt.

Der Modulspeicher 52 enthält Steuerprogramme und Daten, die erstens grundlegende Betriebssystemfunktionen für das Benutzermodul 12 bereitstellen und zweitens das Einbuchen und den Telekommunikationsbetrieb des Mobilgeräts 10 im Hinblick auf das Telekommunikationsnetz 18 ermöglichen. Aus Gründen der Übersichtlichkeit sind diese Steuerprogramme und Daten in Fig.1 nicht gesondert dargestellt. Für die erfindungsgemäßen Aspekte des hier beschriebenen Ausführungsbeispiels besonders relevant und deshalb in Fig. 1 gezeigt sind kryptographische Funktionen 58 im nur-lesbaren Bereich 54 des Modulspeichers 52 sowie Schlüsseldaten 60 und Konfigurationsdaten 62 im beschreibbaren Bereich 56.

Die kryptographischen Funktionen 58 enthalten eine Verschlüsselungsfunktion 64, eine Entschlüsselungsfunktion 66 und eine Schlüsselerzeugungsfunktion 68. Die Schlüsseldaten 60 teilen sich in einen öffentlichen Schlüssel 70 und einen privaten Schlüssel 72 auf. Die Konfigurationsdaten 62 weisen für jedes im Mobilgerät 10 vorgesehene Anwendungsprogramm 46 einen entsprechenden Konfigurationsdatensatz auf, nämlich im hier beschriebenen Ausführungsbeispiel einen Konfigurationsdatensatz 62.1 für den Terminplaner 46.1 sowie einen Konfigurationsdatensatz 62.2 für den Texteditor 46.2.

Im Betrieb stellt das in Fig.1 gezeigte System die üblichen Telekommunikationsfunktionen entsprechend den jeweiligen Standards, im vorliegenden Fall GSM und GPRS, bereit. Zusätzlich kann der Benutzer die Anwendungsprogramme 46 aufrufen und mit diesen die Nutzdaten 48 oder andere Daten bearbeiten.

Zum Bereitstellen der Anwendungsprogramme 46 greift das Mobilgerät 10 beim Einschalten oder spätestens, wenn der Benutzer ein Anwendungsprogramm 46 starten möchte, auf die Konfigurationsdaten 62 im Benutzermodul 12 zu. Dieser Zugriff erfolgt über die Prozessoreinheit 50 des Benutzermoduls 12, die ihrerseits zunächst eine Kennworteingabe anfordert, bevor sie den Zugriff freigibt. Die Kennwortanforderung wird auf der Anzeige 34 des Mobilgeräts 10 angezeigt, und der Benutzer gibt das entsprechende Kennwort über die Tastatur 36 ein. Die Korrektheit des Kennworts wird durch die Prozessoreinheit 50 überprüft.

Hat der Benutzer das korrekte Kennwort eingegeben, so überträgt das Benutzermodul 12 die angeforderten Konfigurationsdaten 62 (entweder alle Konfigurationsdaten 62 oder nur den für das jeweilige Anwendungsprogramm 46.1, 46.2 vorgesehenen Datensatz 62.1, 62.2) an das Mobilgerät 10. Die Prozessoreinheit 32 überprüft nun, ob gemäß den übertragenen Konfigurationsdaten 62, 62.1, 62.2 die Ausführung von Anwendungsprogrammen 46 oder des konkret angeforderten Anwendungsprogramms 46.1, 46.2 zulässig ist. Ist dies der Fall, so wird die Programmausführung freigegeben.

Wenn sich das gewünschte Anwendungsprogramm 46.1, 46.2 bereits im Gerätespeicher 38 befindet, kann das Programm ohne weiteres gestartet werden. Andernfalls wird das benötigte Programm oder Nutzdaten, die ggf. kostenplichtig sein können, über die Luftschnittstelle 16 und das Telekommunikationsnetz 18 von einem Server eines ASP-Anbieters in den Gerätespeicher 38 geladen. Auch dieser Download-Vorgang muss durch das Benutzermodul 12 autorisiert werden, das hierbei als sogenannter gatekeeper arbeitet. Selbst wenn das gewünschte Anwendungsprogramm 46.1, 46.2 bereits im Gerätespeicher 38 enthalten ist, kann dennoch eine Anfrage über die Luftschnittstelle 16 beim ASP-Dienstanbieter erfolgen, um erstens Abrechnungsdaten zu übertragen und zweitens gegebenenfalls vorliegende Programmaktualisierungen in das Mobilgerät 10 zu übernehmen.

Die Konfigurationsdaten 62 betreffen im hier beschriebenen Ausführungsbeispiel nicht nur die grundlegenden Benutzerberechtigungen, sondern auch bevorzugte Einstellungen der Anwendungsprogramme 46, beispielsweise voreingestellte Dateipfade, Spracheinstellungen, Menükonfigurationen und sonstige Benutzerpräferenzen. Diese Einstellungen werden den aufgerufenen Anwendungsprogramm 46 zugänglich gemacht, so dass der Benutzer immer mit der von ihm gewünschten Programmkonfiguration arbeitet. Dies gilt auch dann, wenn der Benutzer sein Benutzermodul 12 mit einem neuen oder anderen Mobilgerät 10 verbindet.

Bei hinreichender Standardisierung der Anwendungsprogrammierungsschnittstellen (APIs = application programming interfaces), wie sie beispielsweise durch Verwendung der Programmiersprache Java® mittelfristig zu erwarten ist, kann damit ein ASP-Anbieter für jeden Benutzer maßgeschneiderte und von dem benutzten Mobilgerät 10 unabhängige Anwendungsprogrammdienste anbieten. Überdies wird ein hohes Sicherheitsniveau erreicht, da sämtliche Anwendungsprogramme 46 nur bei Vorhandensein des Benutzermoduls 12 und nach Kennworteingabe aufrufbar sind. Um einen Missbrauch bei einem Diebstahl des Mobilgeräts 10 in eingeschaltetem Zustand (nach der Kennworteingabe durch den Benutzer) zu verhindern, kann vorgesehen sein, dass nach einer Unterbrechung der Benutzeraktivität für eine vorbestimmte Dauer wieder eine Kennworteingabe angefordert wird, wie dies beispielsweise bei Bildschirmschonern für stationäre Bürocomputer bereits an sich bekannt ist.

In dem bisher beschriebenen Ausführungsbeispiel wurde als kleinste Einheit für den Autorisierungsmechanismus und gegebenenfalls den Ladevorgang über die Luftschnittstelle 16 ein Anwendungsprogramm 46 angesehen. Abhängig von der eingesetzten Programmiertechnologie kann jedoch auch ein feineres Granularitätsniveau verwendet werden. Es können sich also die Konfigurationsdaten 62 beispielsweise auf die Berechtigung des Benutzers zum Ausführen einzelner Programmfunktionen oder einzelner Programm-Module beziehen, und diese Programmfunktionen oder Programm-Module können bei Bedarf einzeln über die Luftschnittstelle 16 geladen werden. Durch diese Vorgehensweise werden erstens lange Ladezeiten vermieden, und zweitens kann eine noch genauere Einstellung auf die Benutzerpräferenzen erfolgen. Auch bei der Aktualisierung von Anwendungsprogrammen 46 über die Luftschnittstelle 16 werden vorzugsweise nur solche Programm-Module übertragen, die sich gegenüber der bereits im Mobilgerät 10 befindlichen Version tatsächlich verändert haben.

Die von den Anwendungsprogrammen 46 bearbeiteten Nutzdaten 48 sind im Gerätespeicher 38 entweder vollständig oder zumindest teilweise in verschlüsselter Form abgelegt. Beispielsweise kann dem Benutzer ein Dateisystem zur Speicherung der Nutzdaten 48 bereitgestellt werden, bei dem einzelne Ordner oder einzelne Laufwerke wahlweise für eine verschlüsselte oder unverschlüsselte Datenspeicherung eingestellt werden können. Eine ähnliche Funktionalität für stationäre Bürocomputer ohne Einsatz eines Benutzermoduls ist bereits durch das Produkt PGPdisk® des Herstellers Network Associates, Inc., bekannt.

Wenn ein Anwendungsprogramm 46 Nutzdaten 48 in einem zur Verschlüsselung vorgesehenen Bereich des Dateisystems speichern möchte, werden diese Daten von der Prozessoreinheit 32 über die Schnittstelle 14 an das Benutzermodul 12 übertragen. Die Prozessoreinheit 50 des Benutzermoduls 12 führt die Verschlüsselungsfunktion 64 aus, wobei der in den Schlüsseldaten 60 enthaltene öffentliche Schlüssel 70 herangezogen wird. Die verschlüsselten Nutzdaten 48 werden über die Schnittstelle 14 und die Prozessoreinheit 32 in den Gerätespeicher 38 geschrieben.

Der Zugriff auf verschlüsselt abgelegte Nutzdaten 48 erfolgt entsprechend. Auch hier führt die Prozessoreinheit 50 des Benutzermoduls 12 die eigentliche Entschlüsselung unter Verwendung der Entschlüsselungsfunktion 66 und des privaten Schlüssels 72 aus. Vorab fordert die Prozessoreinheit 50 jedoch eine Kennworteingabe vom Benutzer an. Erst wenn das korrekte Kennwort (passphrase) auf der Tastatur 36 eingegeben wurde (oder eine sonstige biometrische Identifizierung des Benutzers korrekt durchgeführt wurde), wird der Entschlüsselungsvorgang freigegeben.

Im hier beschriebenen Ausführungsbeispiel wird die Ver- und Entschlüsselung nach einem asymmetrischen RSA-Verfahren durchgeführt. In Ausführungsalternativen sind dagegen andere asymmetrische oder symmetrische Ver- und Entschlüsselungsverfahren oder Mischformen davon, z.B. symmetrische Verschlüsselung unter Verwendung eines asymmetrisch verschlüsselten Schlüssels, vorgesehen. Bei symmetrischen Verfahren braucht nicht zwischen dem öffentlichen Schlüssel 70 und dem privaten Schlüssel 72 unterschieden zu werden.

Insgesamt wird durch die hier vorgeschlagene Technik sichergestellt, dass die verschlüsselten Nutzdaten 48 nur dann ausgelesen bzw. verwendet werden können, wenn das Benutzermodul 12 des berechtigten Benutzers an die Schnittstelle 14 angeschlossen ist und der Benutzer sich, z.B. mittels der passphrase, korrekt identifiziert hat.

Im vorliegenden Ausführungsbeispiel wird der gesamte Ver- und Entschlüsselungsprozess von der Prozessoreinheit 50 des Benutzermoduls 12 durchgeführt, wobei die Schlüsseldaten 60 niemals das Benutzermodul 12 verlassen. Es sind jedoch auch Ausführungsalternativen vorgesehen, bei denen die Verschlüsselungsfunktion 64 und der öffentliche Schlüssel 70, der nicht geheimgehalten zu werden braucht, an das Mobilgerät 10 übergeben werden, so dass der Verschlüsselungsvorgang durch die in der Regel leistungsfähigere Prozessoreinheit 32 des Mobilgeräts 10 durchgeführt werden kann. Für den Entschlüsselungsvorgang kann in manchen Ausführungsalternativen ebenfalls die Prozessoreinheit 32 herangezogen werden, solange dadurch die Sicherheit des privaten Schlüssels 72 nicht kompromittiert wird.

Zur Erzeugung der Schlüsseldaten 60 wird im vorliegenden Ausführungsbeispiel die Schlüsselerzeugungsfunktion 68 verwendet, die ebenfalls von der Prozessoreinheit 50 des Benutzermoduls 12 ausgeführt wird. Auf an sich bekannte Weise berechnet dieses Programm ein Paar aus öffentlichem Schlüssel 70 und privatem Schlüssel 72. Durch diese Maßnahme wird besonders hohe Datensicherheit gewährleistet, weil der private Schlüssel 72 auch bei der Schlüsselerzeugung das Benutzermodul 12 nicht verlässt.

Das hier beschriebene Ausführungsbeispiel ist nicht auf einen einzigen verschlüsselten Bereich für die Nutzdaten 48 und nicht auf ein einziges Verschlüsselungsverfahren beschränkt. So kann beispielsweise - entsprechende Legitimierung durch die passphrase vorausgesetzt - ein verschlüsselter Bereich jederzeit deaktiviert und damit frei zugänglich gemacht werden. Auch eine erneute Verschlüsselung mit demselben oder einem anderen Benutzermodul 12 ist möglich. Es können auch mehrere verschlüsselte Bereiche, gegebenenfalls mit unterschiedlichen Schlüsselpaaren und/ oder in verschiedenen Größen, angelegt und verwaltet werden.

Insbesondere bei der vorliegenden Ausgestaltung, die einen ASP-Anbieter vorsieht, können die verschlüsselten Nutzdaten 48 zusätzlich zur Speicherung im Mobilgerät 10 auch über die Luftschnittstelle 16 zu einem Server des ASP-Anbieters übertragen und dort gespeichert werden. Eine Synchronisierung der beiderseitig gespeicherten Nutzdaten 48 kann bei jedem Schreibzugriff eines Anwendungsprogramms 46 oder beim Beenden einer Benutzersitzung oder auf ausdrückliche Anforderung des Benutzers erfolgen. Der Benutzer hat dann einerseits schnellen Zugriff auf die lokal gespeicherten Nutzdaten 48 und ist andererseits von dem verwendeten Mobilgerät 10 unabhängig, weil er die beim ASP-Anbieter gespeicherten Nutzdaten 48 auch mit jedem anderen Mobilgerät abrufen kann.

Ferner kann in manchen Ausgestaltungen vorgesehen sein, eine Schlüsselkomponente beim Netzbetreiber oder dem ASP-Anbieter zu belassen. Nach erfolgreicher Einbuchung des Mobilgeräts 10 in das Telekommunikationsnetz 18 wird diese Schlüsselkomponente über die Luftschnittstelle 16 übertragen, so dass der Netzbetreiber oder ASP-Anbieter die Kontrolle über bestimmte im Mobilgerät 10 gespeicherte Nutzdaten 48 mit dem Benutzer teilt.

## Patentansprüche

1. Verfahren zum Speichern von und Zugreifen auf Nutzdaten (48) in einem Mobilgerät (10), insbesondere einem Mobiltelefon oder einem persönlichen digitalen Assistenten, das einen Gerätespeicher (38) aufweist und das über eine Schnittstelle (14) mit einem Benutzermodul (12) verbunden ist, wobei
- die Nutzdaten (48) im Gerätespeicher (38) des Mobilgeräts (10) zumindest teilweise in verschlüsselter Form gespeichert werden,
**dadurch gekennzeichnet, dass**
- zumindest das Entschlüsseln der Nutzdaten (48) bei Zugriffsvorgängen unter Verwendung einer Entschlüsselungsfunktion (66) erfolgt, die durch das Benutzermodul (12) bereitgestellt und zumindest teilweise von einer Prozessoreinheit (50) des Benutzermoduls (12) ausgeführt wird.

2. Verfahren nach Anspruch 1, **dadurch gekennzeichnet, dass** ferner das Verschlüsseln der Nutzdaten (48) bei Speichervorgängen unter Verwendung einer Verschlüsselungsfunktion (64) erfolgt, die durch das Benutzermodul (12) bereitgestellt wird.

3. Verfahren nach Anspruch 1 und Anspruch 2, **dadurch gekennzeichnet, dass** das Benutzermodul (12) einen Modulspeicher (52) aufweist, in dem die von dem Benutzermodul (12) bereitgestellten Ver- und Entschlüsselungsfunktionen (64, 66) sowie von diesen Funktionen (64, 66) verwendete Schlüsseldaten (60) enthalten sind, und dass die Ver- und Entschlüsselungsfunktionen (64, 66) zumindest teilweise von einer Prozessoreinheit (50) des Benutzermoduls (12) ausgeführt werden.

4. VerfahrennachAnspruch3, **dadurch gekennzeichnet, dass** durch das Benutzermodul (12) mindestens eine Funktion (68) zum Erzeugen der Schlüsseldaten (60) und zum Schreiben der Schlüsseldaten (60) in den Modulspeicher (52) bereitgestellt wird.

5. Verfahren nach einem der Ansprüche 1 bis 4, **dadurch gekennzeichnet, dass** zumindest die Ausführung der Entschlüsselungsfunktion (66) durch ein Kennwort und/oder eine biometrische Prüfung geschützt ist.

6. Verfahren nach einem der Ansprüche 1 bis 5, **dadurch gekennzeichnet, dass** das Mobilgerät (10) ein auch für Telekommunikationsfunktionen eingerichtetes Gerät ist.

7. Verfahren nach einem der Ansprüche 1 bis 6, **dadurch gekennzeichnet, dass** das Benutzermodul (12) ein auch zur Einbuchung in ein Telekommunikationsnetz (18) vorgesehenes Teilnehmeridentifikanonsmodul ist.

8. Mobilgerät (10), insbesondere Mobiltelefon oder persönlicher digitaler Assistent, das einen Gerätespeicher (38) und eine Schnittstelle (14) zum Anschluss eines Benutzermoduls (12) aufweist, wobei der Gerätespeicher (38) mindestens einen Bereich zum Speichern von Nutzdaten (48) in zumindest teilweise verschlüsselter Form aufweist,
**dadurch gekennzeichnet, dass**
das Mobilgerät (10) dazu eingerichtet ist, zumindest zum Entschlüsseln der Nutzdaten (48) bei Zugriffsvorgängen eine Entschlüsselungsfunktion (66) zu nutzen, die durch das Benutzermodul (12) bereitgestellt und zumindest teilweise von einer Prozessoreinheit (50) des Benutzermoduls (12) ausgeführt wird.

9. Benutzermodul (12), insbesondere Teilnehmeridentifikationsmodul für ein Telekommunikationsnetz (18), das eine Prozessoreinheit (50) aufweist und dazu eingerichtet ist, über eine Schnittstelle (14) mit einem Mobilgerät (10), insbesondere einem Mobiltelefon oder einem persönlichen digitalen Assistenten, verbunden zu werden, wobei das Mobilgerät (10) einen Gerätespeicher (38) mit mindestens einem Bereich zum Speichern von Nutzdaten (48) in zumindest teilweise verschlüsselter Form aufweist,
**dadurch gekennzeichnet, dass**
das Benutzermodul (12) dazu eingerichtet ist, dem Mobilgerät (10) über die Schnittstelle (14) zumindest zum Entschlüsseln der Nutzdaten (48) bei Zugriffsvorgängen eine Entschlüsselungsfunktion (66) bereitzustellen, die zumindest teilweise durch die Prozessoreinheit (50) des Benutzermoduls (12) ausgeführt wird.

## Claims

1. Method for storing and accessing user data (48) in a mobile device (10), in particular a mobile telephone or a personal digital assistant, the mobile device (10) comprising a device memory (38) and being connected to a user module (12) via an interface (14), wherein
- the user data (48) is stored in the device memory (38) of the mobile device (10) at least partially in encrypted form,
**characterised in that**
- at least the decryption of the user data (48) in access operations is performed using a decrypting function (66), the decrypting function (66) being provided by the user module (12) and being executed, at least in part, by a processor unit (50) of the user module (12).

2. Method according to claim 1, further **characterised in that** the encryption of the user data (48) in storage operations is performed using an encrypting function (64), which is provided by the user module (12).

3. Method according to both claim 1 and claim 2, **characterised in that** the user module (12) comprises a module memory (52), in which the encrypting and decrypting functions (64, 66) provided by the user module (12), as well as key data (60) used by these functions (64, 66), are contained, and **in that** the encrypting and decrypting functions (64, 66) are executed, at least in part, by a processor unit (50) of the user module (12).

4. Method according to claim 3, **characterised in that** at least one function (68) for generating the key data (60) and for writing the key data (60) into the module memory (52) is provided by the user module (12).

5. Method according to any of claims 1 to 4, **characterised in that** at least the execution of the decrypting function (66) is protected by a password and/ or a biometric test.

6. Method according to any of claims 1 to 5, **characterised in that** the mobile device (10) is a device that is also set up for telecommunications functions.

7. Method according to any of claims 1 to 6, **characterised in that** the user module (12) is a subscriber identification module that is also provided for logging into a telecommunications network (18).

8. Mobile device (10), in particular a mobile telephone or a personal digital assistant, the mobile device (10) comprising a device memory (38) and an interface (14) for connecting a user module (12), wherein the device memory (38) comprises at least one region for storing user data (48) in at least partially encrypted form,
**characterised in that**
the mobile device (10) is adapted to use, at least for decrypting the user data (48) in access operations, a decrypting function (66) that is provided by the user module (12) and is executed, at least in part, by a processor unit (50) of the user module (12).

9. User module (12), in particular a subscriber identification module for a telecommunications network (18), the user module (12) comprising a processor unit (50) and being adapted to be connected, via an interface (14), to a mobile device (10), in particular a mobile telephone or a personal digital assistant, the mobile device (10) comprising a device memory (38) having at least one region for storing user data (48) in at least partially encrypted form,
**characterised in that**
the user module (12) is adapted to provide to the mobile device (10), via the interface (14), a decrypting function (66) at least for decrypting the user data (48) in access operations, the decrypting function (66) being executed, at least in part, by the processor unit (50) of the user module (12).

## Revendications

1. Procédé d'enregistrement et de consultation de données de service (48) dans un appareil mobile (10), en particulier un téléphone mobile ou un assistant personnel numérique, qui comprend une mémoire d'appareil (38) et qui est connecté par le biais d'une interface (14) avec un module d'utilisation (12), où :
- les données de service (48) sont enregistrées au moins partiellement sous une forme codée dans la mémoire d'appareil (38) de l'appareil mobile (10) ;
**caractérisé en ce qu'**au moins le décodage des données de service (48) lors d'opérations de consultation est réalisé au moyen d'une fonction de décodage (66) qui est fournie par le module d'utilisation (12) et exécutée au moins partiellement par une unité de processeur (50) du module d'utilisation (12).

2. Procédé selon la revendication 1, **caractérisé en ce que** le codage des données de service (48) lors d'opérations d'enregistrement est en outre réalisé au moyen d'une fonction de codage (64) qui est fournie par le module d'utilisation (12).

3. Procédé selon la revendication 1 et la revendication 2, **caractérisé en ce que** le module d'utilisation (12) comprend une mémoire de module (52), dans laquelle sont contenues les fonctions de codage et de décodage (64, 66) fournies par le module d'utilisation (12), ainsi que des données de codage (60) utilisées par ces fonctions (64, 66), et **en ce que** les fonctions de codage et de décodage (64, 66) sont exécutées au moins partiellement par une unité de processeur (50) du module d'utilisation (12).

4. Procédé selon la revendication 3, **caractérisé en ce qu'**au moins une fonction (68) est fournie par le module d'utilisation (12) pour la production des données de codage (60) et pour l'écriture des données de codage (60) dans la mémoire de module (52).

5. Procédé selon l'une quelconque des revendications 1 à 4, **caractérisé en ce qu'**au moins l'exécution de la fonction de décodage (66) est protégée par un mot de passe et/ou un contrôle biométrique.

6. Procédé selon l'une quelconque des revendications 1 à 5, **caractérisé en ce que** l'appareil mobile (10) est un appareil conçu également pour des fonctions de télécommunication.

7. Procédé selon l'une quelconque des revendications 1 à 6, **caractérisé en ce que** le module d'utilisation (12) est un module d'identification de participant également prévu pour l'enregistrement dans un réseau de télécommunication (18).

8. Appareil mobile (10), en particulier téléphone mobile ou assistant personnel numérique, qui comprend une mémoire d'appareil (38) et une interface (14) pour la connexion d'un module d'utilisation (12), dans lequel la mémoire d'appareil (38) comprend au moins une zone pour l'enregistrement de données de service (48) sous une forme au moins partiellement codée ;
**caractérisé en ce que** l'appareil mobile (10) est conçu pour utiliser, aux fins du décodage des données de service (48) lors d'opérations de consultation, une fonction de décodage (66) qui est fournie par le module d'utilisation (12) et exécutée au moins partiellement par une unité de processeur (50) du module d'utilisation (12).

9. Module d'utilisation (12), en particulier module d'identification de participant pour un réseau de télécommunication (18), qui comprend une unité de processeur (50) et qui est conçu pour être connecté par le biais d'une interface (14) à un appareil mobile (10), en particulier un téléphone mobile ou un assistant personnel numérique, étant entendu que l'appareil mobile (10) comprend une mémoire d'appareil (38) ayant au moins une zone pour l'enregistrement de données de service (48) sous une forme au moins partiellement codée ;
**caractérisé en ce que** le module d'utilisation (12) est conçu pour fournir à l'appareil mobile (10) par le biais de l'interface (14), au moins aux fins du décodage des données de service (48) lors d'opérations de consultation, une fonction de décodage (66) qui est exécutée au moins partiellement par l'unité de processeur (50) du module d'utilisation (12).
